Europäisches Patentamt

European Patent Office

Office européen des brevets

(19)

(11) Veröffentlichungsnummer: **0 051 770**
**B1**

# (12) EUROPÄISCHE PATENTSCHRIFT

(45) Veröffentlichungstag der Patentschrift:
08.05.85

(51) Int. Cl.⁴: **C 08 L 27/06**

(21) Anmeldenummer: **81108680.0**

(22) Anmeldetag: **22.10.81**

(54) **Polyvinylchlorid-Formmasse.**

(30) Priorität: **03.11.80 DE 3041231**

(43) Veröffentlichungstag der Anmeldung:
**19.05.82 Patentblatt 82/20**

(45) Bekanntmachung des Hinweises auf die Patenterteilung:
**08.05.85 Patentblatt 85/19**

(84) Benannte Vertragsstaaten:
**BE DE FR GB IT NL SE**

(56) Entgegenhaltungen:
**DE - B - 1 236 774**
**GB - A - 887 669**
**US - A - 3 428 707**
**US - A - 3 517 083**

(73) Patentinhaber: **BAYER AG, Konzernverwaltung RP**
**Patentabteilung, D-5090 Leverkusen 1 Bayerwerk (DE)**

(72) Erfinder: **Hardt, Dietrich, Dr., Nietzschestrasse 8,**
**D-5090 Leverkusen 1 (DE)**
Erfinder: **Mietzsch, Fritz, Dr., Hauptstrasse 364,**
**D-5060 Bergisch-Gladbach 2 (DE)**
Erfinder: **Billinger, Otto, Birkenstrasse 13, D-5460 Linz**
**(DE)**

BUNDESDRUCKEREI BERLIN

**Beschreibung**

Die Erfindung betrifft eine kerbschlagzähe Polyvinylchlorid(PVC)-Formmasse auf der Basis von Vinylchlorid-Polymerisaten und Schlagfestmodifikatoren, die bestimmte Polysiloxane und gegebenenfalls übliche Zusätze und Hilfsmittel enthält und sich durch eine Verbesserung der Verarbeitbarkeit und geringe Schrumpfwerte der daraus hergestellten Gegenstände auszeichnet.

Aus der US-A-3 428 707 und der GB-A-887 669 sind mit Siloxanen modifizierte PVC-Formmassen bekannt. Jedoch ist das Schrumpfverhalten dieser Formmassen nicht immer befriedigend.

Die Qualität von kerbschlagzähen PVC-Formmassen bzw. der daraus hergestellten Halbzeuge und Fertigartikel hängt nicht nur in hohem Maße von der Verarbeitung, sondern auch von der Zusammensetzung und von der Art des gewählten Schlagfestmodifikators ab. Größen, die bei der Verarbeitung und der Begutachtung des Fertigartikels eine große Rolle spielen, sind beispielsweise rheologisches Verhalten, Ausstoßleistung, Homogenität und Chargengleichheit der Fertigartikel, Zähigkeit bzw. Kerbschlagzähigkeit, Oberflächenbeschaffenheit und Alterungsverhalten. Auch der Schrumpf nach der Wärmelagerung spielt besonders bei der Profilextrusion eine bedeutende Rolle. Es sind daher hinsichtlich Verarbeitungsverhalten und Endqualität die verschiedensten Formmassen bekannt, die individuelle Verarbeitung erfordern und unterschiedliche Gebrauchseigenschaften aufweisen.

Die Verarbeitung solcher kerbschlagzähen PVC-Formmassen erfolgt in erster Linie durch Extrusion zu Profilen oder Platten. Hierbei wird die Formmasse sowohl durch die erforderliche Verarbeitungstemperatur als auch die bei der Extrusion auftretende Schereinwirkung beansprucht. Es ist bekannt, daß sich die vielfältigen, nach den unterschiedlichsten Rezepturen zusammengesetzten PVC-Formmassen hinsichtlich ihrer Verarbeitung bei der Extrusion unterschiedlich verhalten und für jede Formmasse ein individueller, optimaler Verarbeitungsbereich besteht. Werden diese optimalen Verarbeitungsbedingungen beispielsweise durch gezielte Erhöhung der Ausstoßleistung, Erhöhung der Temperatur oder Friktion oder auch unvorhergesehene Störungen verändert, zeigen sich normalerweise Abweichungen im mechanischen Werteniveau, der Oberflächenbeschaffenheit und auch der Reststabilität. Ein häufig beobachteter Nachteil bei der Extrusion solcher zweiphasig aufgebauter PVC-Formmassen ist der Verlust an Kerbschlagzähigkeit, wie er beispielsweise bei den geschilderten ungünstigen Bedingungen leicht eintreten kann. Dies rührt daher, daß bei solchen Belastungen der Formmassen die Zweiphasigkeit und damit insbesondere die Kerbschlagzähigkeit teilweise oder bei besonderer Beanspruchung sogar vollständig zusammenbricht. Es ist daher anzustreben, insbesondere die Formmassen, die mit unvernetzten und daher leicht in der PVC-Phase löslichen Modifikatoren aufgebaut sind, so zu rezeptieren und zu verarbeiten, daß eine möglichst große Verarbeitungssicherheit hinsichtlich der Kerbschlagzähigkeit gewährleistet ist. Diese Sicherheit ist insbesondere bei PVC-Formmassen mit Ethylen-Vinylacetat-Copolymerisat (EVA) oder chloriertem Polyethylen als zähigkeitsmodifizierender Komponente noch verbesserungsbedürftig.

Eine weitere Problematik bei der Extrusion von Profilen aus kerbschlagzähen PVC-Formmassen besteht darin, das kontinuierlich den Extruder verlassende Halbzeug (Profil) unter möglichst geringen Eigenspannungen zu fertigen. Schon reines Homo-PVC erhält während der Extrusion aufgrund seiner Struktur und der verarbeitungstechnischen Gegebenheiten eine Orientierung während der Passage durch das Extrusionswerkzeug. Die nach dem Abschrecken des heißen Profils eingefrorenen Spannungen werden bei Temperaturerhöhung, insbesondere im Bereich der Glasübergangstemperatur, wieder frei und äußern sich in einem meßbaren Schrumpfwert des Profils. Dieses Schrumpfverhalten beeinträchtigt naturgemäß den Gebrauchswert solcher Profile in einer Vielzahl von Einsatzgebieten. Durch die Verwendung von Schlagfestmodifikatoren und die damit entstehende Zweiphasigkeit wird die Schrumpftendenz merklich erhöht. So zeigt reines Hart-PVC Schrumpfwerte von etwa 1 bis 1,3%, gemessen an 20 cm langen Profilstücken, die eine Stunde bei 100°C getempert wurden. Durch Verwendung von Schlagfestmodifikatoren in den üblichen Konzentrationsbereichen können die Schrumpfwerte bis auf 2% steigen (gemessen z. B. an einem für die Fensterherstellung bestimmten Rahmenprofil).

Es hat daher nicht an Versuchen gefehlt, durch verfahrenstechnische und rezepturbedingte Maßnahmen den Schrumpf an extrudierten Profilen zu reduzieren. Eine allgemein befriedigende Lösung hat sich jedoch noch nicht ergeben.

Es wurde nun gefunden, daß durch Zusatz spezieller Polysiloxane die Verarbeitungssicherheit von kerbschlagzähen PVC-Formmassen erheblich verbessert werden kann. Dies äußert sich darin, daß trotz Temperaturerhöhung und verstärkter Friktion bei der Extrusion ein Abfall der Kerbschlagzähigkeit gar nicht oder nur abgeschwächt oder verzögert eintritt. Beispielsweise zeigt eine schlagfeste PVC-Formmasse mit 6% EVA-Gehalt bei Massetemperaturen von 180–185°C bei der Extrusion bereits deutliche Anzeichen eines Abfalls der Kerbschlagzähigkeit. Durch Mitverwendung bestimmter Polysiloxane kann die sichere Verarbeitbarkeit bis ca. 200°C ausgedehnt und damit die Sensibilität gegen Schwankungen der Verarbeitungsbedingungen wesentlich herabgesetzt werden. Die Herabsetzung der Tendenz zum Zähigkeitsverlust zeigt sich auch bei zeitlicher Belastung einer PVC-Formmasse auf Basis EVA/PVC bei konstanter Temperatur. Die Belastungszeit auf einem Walzwerk kann wesentlich erhöht werden, bevor es zu einem Abfall der Kerbschlagzähigkeit kommt. Ferner ist bei Extrusionsversuchen zu beobachten, daß eine deutliche Abnahme der Energieaufnahme bei der Extrusion eintritt, wenn mit bestimmten Polysiloxanen modifizierte PVC-Formmassen verarbeitet werden.

Ein weiterer unerwarteter Effekt besteht darin, daß die Polysiloxane enthaltenden kerbschlagzähen PVC-Formmassen auch eine Verbesserung des Schrumpfverhaltens daraus hergestellter Profile aufweisen. Im Vergleich zu polysiloxanfreien Formmassen liegt der Schrumpfwert bei sonst konstanten Rezeptur- und Verarbeitungsparametern 0,3—0,5% niedriger, d. h., er verringert sich z. B. von 1,8 auf 1,4%.

Es ist als besonders überraschend anzusehen, daß die erfindungsgemäß eingesetzten Polysiloxane die geschilderten Effekte erbringen, ohne daß ein Einfluß des Molekulargewichtes innerhalb eines weiten Bereiches ersichtlich ist. Wesentlich für die Größe der beobachteten Effekte sind vermutlich die Art und Struktur der Siloxane und die Konzentration in der PVC-Formmasse.

Gegenstand der Erfindung ist eine kerbschlagzähe Polyvinylchlorid-Formmasse mit geringem Schrumpfwert auf der Basis von Vinylchlorid-Polymerisaten und Schlagfestmodifikatoren, gegebenenfalls enthaltend übliche Zusätze und Hilfsmittel, dadurch gekennzeichnet, daß die Formmasse 0,01—5 Gew.-%, vorzugsweise 0,1—2,0 Gew.-%, bezogen auf die Summe von Vinylchlorid-Polymerisat und Schlagfestmodifikator, flüssige Polysiloxane mit Viskositäten von 20—100 000 cSt (mm$^2$/s) und/oder feste Polysiloxane mit Molgewichten von 20 000—500 000 enthält. Vorzugsweise haben die flüssigen Polysiloxane Viskositäten von 60—50 000 cSt (mm$^2$/s).

Bevorzugte Polysiloxane sind Polydimethylsiloxane und Polymethylphenylsiloxane.

Besonders bevorzugte Polysiloxane sind

a)   flüssige Polydimethylsiloxane mit Methylendgruppen im Viskositätsbereich von 20—100 000 cSt (mm$^2$/s),

b)   flüssige Polymethylphenylsiloxane mit Methylendgruppen im Viskositätsbereich von 20—100 000 cSt (mm$^2$/s),

c)   feste Polydimethylsiloxane mit OH-Endgruppen und Molekulargewichten von MG 40 000—100 000,

d)   Polydimethylsiloxane mit Vinylendgruppen und Molekulargewichten von MG 20 000—500 000.


Die erfindungsgemäße Formmasse ist aufgebaut aus

a)   99—85 Gew.-% Vinylchlorid-Polymerisat (Harzphase) und

b)   1—15 Gew.-% Schlagfestmodifikator (Elastomerphase).


In dieser zweiphasigen Formmasse können die Komponenten a) und b) teilweise oder vollständig chemisch miteinander verknüpft sein und z. B. in Form eines Pfropfpolymerisats vorliegen.

Geeignete Vinylchlorid-Polymerisate sind Homopolyvinylchlorid, Copolymerisate von Vinylchlorid mit bis zu 20 Gew.-% ethylenisch ungesättigter Comonomerer, Pfropfpolymerisate von Vinylchlorid, insbesondere mit den Schlagfestmodifikatoren als Pfropfbasis, sowie Gemische dieser Polymerisate.

Der Schlagfestmodifikator ist ein Ethylen-Vinylacetat-Copolymerisat.

Geeignete Ethylen-Vinylacetat-Copolymerisate enthalten 25—60, vorzugsweise 35—50 Gew.-% Vinylacetat und haben Molekulargewichte von 20 000—500 000.

Bevorzugte Formmassen sind aufgebaut aus

a)   99—85 Gew.-% Polyvinylchlorid und

b)   1—15 Gew.-% Ethylen-Vinylacetat-Copolymerisat

bzw. aus Pfropfpolymerisaten aus

a)   97—85 Gew.-% polymerisierten Einheiten von Vinylchlorid auf

b)   3—15 Gew.-% Ethylen-Vinylacetat-Copolymerisat,

wobei die Summe von a) und b) jeweils 100 Gew.-% beträgt.

Weiterhin sind Formmassen bevorzugt auf der Basis von Mischungen aus a) Polyvinylchlorid und b) einem Pfropfpolymerisat aus

1)   40—96 Gew.-% polymerisierten Einheiten von Vinylchlorid auf

2)   60—4 Gew.-% Ethylen-Vinylacetat-Copolymerisat,

wobei die Summe von 1) und 2) stets 100 Gew.-% und der Gesamtgehalt an 2), bezogen auf die Mischung aus a) und b), 3—15 Gew.-% beträgt.

Besonders bevorzugt sind Formmassen mit einem Gehalt an Ethylen-Vinylacetat-Copolymerisat von 4—8 Gew.-%.

Die Schlagfestmodifikatoren werden in reiner Form als Blockware, Granulate oder Pulver, wobei z. B. Talkum, Kreide oder Silikate als die Rieselfähigkeit verbessernde Zusätze enthalten sein können, zugemischt. Eine vielfach ausgeübte Variante besteht jedoch darin, die kautschukelastischen Polymerisate zunächst einer Pfropfpolymerisation, vorzugsweise mit Vinylchlorid, gegebenenfalls auch anderen Monomeren, zu unterwerfen und die resultierenden Pfropfpolymeren in die PVC-Formmasse einzubringen. Es besteht auch die Möglichkeit, die Pfropfpolymerisation so zu steuern, daß das gewünschte Verhältnis von PVC-Harzphase und Elastomerphase im Pfropfpolymerisat enthalten ist, so daß sich eine weitere Abmischung mit PVC, die erfindungsgemäß möglich ist, erübrigt und somit das aus polymerisiertem Vinylchlorid und der Elastomerphase bestehende Pfropfpolymerisat selbst die Formmasse darstellt.

Übliche Zusätze und Hilfsmittel, die in der Formmasse enthalten sein können, sind z. B. entsprechend den jeweiligen Anforderungen Stabilisatoren, Gleitmittel, Pigmente, Farbstoffe, Füllstoffe, Fließhilfen und Flammschutzmittel.

Üblicher Bestandteil von PVC-Formmassen sind z. B. Stabilisatoren gegen thermischen und alterungsbedingten Abbau wie Barium/Cadmium- oder Bleisalze, Zinnverbindungen und/oder Epoxiverbindungen, wie in der PVC-Technologie üblicherweise verwendet. Weiterhin sind Gleitmittel zur Verbesserung des Fließverhaltens, wie beispielsweise Metallseifen, höhere Fettalkohole, Fettsäureglycerinester, synthetische Wachse oder Paraffin und gegebenenfalls Fließhilfen auf Polyacrylat- oder Styrol/Acrylnitrilbasis, einsetzbar.

Die erfindungsgemäße Formmasse kann nach den verschiedensten Methoden hergestellt, aufbereitet und gemischt bzw. verarbeitet werden. Die Herstellung der PVC-Formmasse erfolgt zunächst in der Weise, daß die Einzelkomponenten in Schnellmischern, gegebenenfalls unter Temperaturerhöhung, innig vermischt werden. Derartige Mischungen können unmittelbar den verschiedenen Verarbeitungsverfahren (dry-blend-Verarbeitung) zugeführt werden oder aber vor der nachfolgenden endgültigen Formgebung eine Granulierstufe durchlaufen.

Es ist jedoch möglich und Stand der Technik, die Bestandteile der Formmasse auf Walzen, Knetern, Innenmischern oder Mischschnecken zu homogenisieren und entweder unmittelbar weiter zu verarbeiten oder zunächst ein Granulat herzustellen.

Besonders geeignet sind folgende, z. T. aus der DE-AS 1 495 694 und der DE-OS 1 544 873 bekannte Verfahren:

1.  Polyvinylchlorid und/oder Polyvinylchlorid-Copolymerisate mit ethylenisch ungesättigten Verbindungen werden gemeinsam mit dem pulver- oder granulatförmigen Schlagfestmodifikator, gegebenenfalls unter Zerkleinerung, der Polysiloxanverbindung sowie den üblichen Zusatzstoffen (Stabilisatoren, Gleitmittel, Füllstoffe, Pigmente) gemischt und unmittelbar verarbeitet (dry-blend-Verfahren) oder über die Granulierstufe weiterverarbeitet; auf Walzen, Knetern oder Schnecken hergestellte Mischungen werden zum Granulat oder unmittelbar über Kalander weiterverarbeitet. Das hier beschriebene Verfahren bezieht sich auf alle Schlagfestmodifikatoren, insbesondere jedoch Ethylen-Vinylacetat-Copolymerisate, chloriertes Polyethylen und Acrylatpolymere.

2.  Pfropfpolymerisate von Vinylchlorid auf Ethylen-Vinylacetat-Copolymerisate werden, gegebenenfalls unter Zumischung von Homo-PVC zur Einstellung der erforderlichen EVA-Konzentration, unter Zusatz der Polysiloxane und weiterer Verarbeitungshilfsmittel im Schnellmische gemischt und weiterverarbeitet. Auch die Verarbeitung solcher Mischungen über Walzen, Kneter und Innenmischer ist möglich.

3.  Vor der Durchführung der Pfropfpolymerisation von Vinylchlorid auf Ethylen-Vinylacetat-Copolymerisate werden die Polysiloxane in den erforderlichen Mengen dem Pfropfansatz zugegeben und durchlaufen den Polymerisationsprozeß. Sie finden sich nach Beendigung der Reaktion im Pfropfpolymerisat, das entsprechend 1 oder 2 weiterverarbeitet wird.

4.  Nach Beendigung der PVC-Polymerisation bzw. der Pfropfpolymerisation von Vinylchlorid auf EVA-Copolymerisate werden die vorzugsweise flüssigen Polysiloxane der PVC-Suspension bzw. Dispersion zugesetzt und unter Rühren homogen verteilt. Die Polysiloxane ziehen auf das PVC-Korn auf und finden sich nach der Isolierung im PVC bzw. PVC-Pfropfpolymerisat.

Verarbeitungsfertige pulverförmige Mischungen (dry blends) bzw. verarbeitungsfertige Granulate werden entsprechend dem Stand der Technik über Extruder, Spritzguß oder Blasmaschinen zu Halbzeugen bzw. Fertigartikeln verarbeitet. Selbstverständlich ist die Verarbeitung der Formmassen auch über Walzen, Pressen oder formgebende Kalander möglich.

Die erfindungsgemäßen Formmassen zeichnen sich durch ihre Qualität hinsichtlich ihres mechanischen Werteniveaus und ihres Verhaltens bei Alterungs- und Bewitterungsprozessen aus und sind für die vielfältigsten Einsatzgebiete geeignet. In erster Linie werden extrudierte Profile daraus hergestellt, jedoch werden die Formmassen auch verarbeitet zu Spritzgußartikeln oder Kalanderfolien. Während die mit lichtbeständigen Schlagfestmodifikatoren ausgerüsteten kerbschlagzähen PVC-Formmassen im Inneneinsatz Verwendung finden, hier sind es besonders Möbel- und Bauteile, Rohre, Folien und Verpackungsmaterialien, werden für den Außeneinsatz, insbesondere im Bauwesen, die Systeme mit höchster Wetterbeständigkeit verwendet. Vor allem bei der Herstellung von Fensterprofilen, Fassadenplatten, Bänken für Parks und Sportstadien, Regenrinnen und Regenfallrohren, Straßenbegrenzungspfosten und Autobahnschallschutzkonstruktionen sind erfindungsgemäße lichtbeständige kerb-

4

schlagzähe PVC-Formmassen auf der Basis von Ethylen-Vinylacetat-Copolymerisaten besonders geeignet.

## Beispiele

In folgenden Beispielen wird der Einfluß der Polysiloxane A—F im Sinne der Erfindung aufgezeigt, daß durch den Zusatz dieser Polysiloxane zu Formmassen, bestehend aus Hart-PVC und Ethylenvinylacetat, eine wesentliche Erweiterung der Verarbeitungsbreite und eine deutliche Reduzierung der Schrumpftendenz an extrudierten Profilen erzielt wird.

Tabelle der in den Beispielen verwendeten Polysiloxane:

Polysiloxan A:
Polydimethylsiloxan mit Methylendgruppen und einer Viskosität von 20 cSt ($mm^2/s$).

Polysiloxan B:
Polydimethylsiloxan mit Methylendgruppen und einer Viskosität von 140 cSt ($mm^2/s$).

Polysiloxan C:
Polymethylphenylsiloxan mit Methylendgruppen und einer Viskosität von 350 cSt ($mm^2/s$).

Polysiloxan D:
Polymethylphenylsiloxan mit Methylendgruppen und einer Viskosität von 1000 cSt ($mm^2/s$).

Polysiloxan E:
Polydimethylsiloxan mit OH-Endgruppen und einem Molekulargewicht MG von 90 000.

Polysiloxan F:
Polydimethylsiloxan mit Vinylendgruppen und einem Molekulargewicht MG von 500 000.

## Beispiele 1.1—1.8

1.1 Aus 94 Gew.-Teilen S-PVC (K-Wert 65), 6 Gew.-Teilen Ethylenvinylacetat (EVA, Molekulargewicht MG = 150 000, Vinylacetatgehalt 45 Gew.-%) und 1,5 Gew.-Teilen Di-n-octylzinnmercaptid wird auf einer Labormischwalze, wie in Tabelle I beschrieben, ein Walzfell hergestellt, zu einer Preßplatte verarbeitet und an den daraus hergestellten Probekörpern die Kerbschlagzähigkeit bestimmt.

1.2 Zusammensetzung wie Beispiel 1.1
+ 1,5 Gew.-Teile Polysiloxan A, Herstellung der Probekörper und Prüfung wie unter Beispiel 1.1.

1.3 Zusammensetzung wie Beispiel 1.1
+ 1,0 Gew.-Teil Polysiloxan B, Herstellung der Probekörper und Prüfung wie unter Beispiel 1.1.

1.4 Zusammensetzung wie Beispiel 1.1
+ 1,5 Gew.-Teile Polysiloxan C, Herstellung der Probekörper und Prüfung wie unter Beispiel 1.1.

1.5 Zusammensetzung wie Beispiel 1.1
+ 0,5 Gew.-Teile Polysiloxan C, Herstellung der Probekörper und Prüfung wie unter Beispiel 1.1.

1.6 Zusammensetzung wie Beispiel 1.1
+ 1,5 Gew.-Teile Polysiloxan D, Herstellung der Probekörper und Prüfung wie unter Beispiel 1.1.

1.7 Zusammensetzung wie Beispiel 1.1
+ 1,0 Gew.-Teil Polysiloxan E, Herstellung der Probekörper und Prüfung wie unter Beispiel 1.1.

1.8 Zusammensetzung wie Beispiel 1.1
+ 1,5 Gew.-Teile Polysiloxan F, Herstellung der Probekörper und Prüfung wie unter Beispiel 1.1.

Tabelle I

Kerbschlagzähigkeit ($kJ/m^2$) nach DIN 53 453 bei 23°C, in Abhängigkeit von der Walztemperatur, gemessen an Probekörpern, die aus Preßplatten der Beispiele 1.1—1.8 hergestellt wurden.

Walzfellherstellung:
Laborwalze, Walzenbreite 230 mm, Walzendurchmesser 110 mm, Walzendrehzahlen 22 : 18 UpM, Walztemperatur in °C s. u., Walzzeit 10 Min.

Preßplattenherstellung:
Abmessung: 120 × 120 × 4 mm; Vorheizen 7 Min., Pressen 3 Min. b. 24,5 $N/mm^2$, Preßtemperatur 175° C.

| Bei-spiele | Gew.-Teile der Polysil-oxane A—F auf 100 Gew.-Teile des Beispiels 1.1 | Kerbschlagzähigkeitswerte in kJ/m² bei 23°C in Abhängigkeit von nachstehenden Walztemperaturen | | | | | | |
|---|---|---|---|---|---|---|---|---|
| | | 160°C | 170°C | 180°C | 185°C | 190°C | 195°C | 200°C |
| 1.1 | Vergleichsbeispiel | 12 | 39 | 40 | 14 | 4 | 4 | 3 |
| 1.2 | 1,5 Gew.-Teile A | 15 | 35 | 39 | 41 | 30 | 13 | 7 |
| 1.3 | 1,0 Gew.-Teile B | 11 | 29 | 38 | 39 | 28 | 20 | 14 |
| 1.4 | 1,5 Gew.-Teile C | 11 | 32 | 36 | 45 | 42 | 31 | 20 |
| 1.5 | 0,5 Gew.-Teile C | 9 | 27 | 37 | 35 | 24 | 20 | 13 |
| 1.6 | 1,5 Gew.-Teile D | 16 | 37 | 39 | 40 | 38 | 22 | 18 |
| 1.7 | 1,0 Gew.-Teile E | 13 | 29 | 42 | 29 | 21 | 17 | 10 |
| 1.8 | 1,5 Gew.-Teile F | 20 | 33 | 37 | 45 | 24 | 18 | 10 |

Wie aus Tabelle I ersichtlich, führt der Zusatz der Polysiloxane A—F zu einer Erweiterung des Verarbeitungstemperaturbereiches um 10—15°C bei hervorragenden Kerbschlagzähigkeitswerten. Außerdem ist aus Tabelle I ersichtlich, daß die Erweiterung des Verarbeitungstemperaturbereiches nicht vom Molekulargewicht der Polysiloxane A—F abhängt.

## Beispiele 2.1—2.5

2.1 600 Gew.-Teile eines Vinylchlorid-EVA-Pfropfpolymerisats (VCEVA) (EVA-Gehalt 10 Gew.-%, K-Wert 68), 400 Gew.-Teile S-PVC (K-Wert 65), 25 Gew.-Teile Barium/Cadmium-Stabilisator fest (mind. 10% Cd-Gehalt), 10 Gew.-Teile epoxidiertes Sojabohnenöl, 5 Gew.-Teile Organophosphit, 3 Gew.-Teile Oxystearinsäure, 3 Gew.-Teile Wachsester, 30 Gew.-Teile Weißpigment (Titandioxid, Rutil-Typ) und 30 Gew.-Teile Füllstoff (gecoatetes Calciumcarbonat) werden in einem Heiz-Kühlmischer (1500 UpM) in der für Hart-PVC-Dryblends gebräuchlichen Verfahrensweise aufbereitet. Jeweils 110 g dieser PVC-Formmasse (Vergleichsbeispiel) werden auf einer Labormischwalze, wie in Tabelle I beschrieben, unter Walzbedingungen, wie in Tabelle I beschrieben, zu Walzfellen verarbeitet, zu Platten verpreßt, wie in Tabelle I beschrieben, und an den daraus hergestellten Probekörpern die Kerbschlagzähigkeit bestimmt.

2.2 Zu 1106 Gew.-Teilen einer PVC-Formmasse, Zusammensetzung wie in Beispiel 2.1, werden 15 Gew.-Teile Polysiloxan A gegeben, aufbereitet, gewalzt, gepreßt und geprüft, wie in Beispiel 2.1 beschrieben.

2.3 Zu 1106 Gew.-Teilen einer PVC-Formmasse, Zusammensetzung wie in Beispiel 2.1, werden 8 Gew.-Teile Polysiloxan B gegeben, aufbereitet, gewalzt, gepreßt und geprüft, wie in Beispiel 2.1 beschrieben.

2.4 Zu 1106 Gew.-Teilen einer PVC-Formmasse, Zusammensetzung wie in Beispiel 2.1, werden 10 Gew.-Teile Polysiloxan C gegeben, aufbereitet, gewalzt, gepreßt und geprüft, wie in Beispiel 2.1 beschrieben.

2.5 Zu 120 Gew.-Teilen eines VCEVA-Handelsproduktes (EVA-Gehalt 50 Gew.-%, K-Wert 75), 880 Gew.-Teilen S-PVC (K-Wert 65), Stabilisatoren, Gleitmitteln, Pigment und Füllstoff wie in Beispiel 2.1, werden 10 Gew-Teile Polysiloxan C gegeben, aufbereitet, gewalzt, gepreßt und geprüft, wie in Beispiel 2.1 beschrieben.

Tabelle II

Kerbschlagzähigkeit (kJ/m²) nach DIN 53 453 bei 23°C, in Abhängigkeit von der Walztemperatur, gemessen an Probekörpern, die aus Preßplatten der Beispiele 2.1—2.5 hergestellt wurden.

Walzfellherstellung: wie in Tabelle I

Preßplattenherstellung: wie in Tabelle I

| Beispiele | Gew.-Teile der Polysiloxane A—F auf 110 Gew.-Teile des Beispiels 2.1 | Kerbschlagzähigkeitswerte in kJ/m² bei 23°C in Abhängigkeit von nachstehenden Walztemperaturen | | | | | | |
|---|---|---|---|---|---|---|---|---|
| | | 160°C | 170°C | 180°C | 185°C | 190°C | 195°C | 200°C |
| 2.1 | Vergleichsbeispiel | 12 | 37 | 40 | 11 | 4 | 4 | 3 |
| 2.2 | 1,5 Gew.-Teile A | 13 | 35 | 39 | 39 | 28 | 19 | 14 |
| 2.3 | 0,8 Gew.-Teile B | 14 | 38 | 36 | 35 | 21 | 14 | 9 |
| 2.4 | 1,0 Gew.-Teile C | 13 | 36 | 41 | 38 | 26 | 21 | 15 |
| 2.5 | 1,0 Gew.-Teile C | 12 | 33 | 37 | 31 | 20 | 15 | 10 |

Wie aus Tabelle II ersichtlich, wird die Erweiterung des Verarbeitungstemperaturbereiches um 10—15°C, auch durch Zusatz dieser Polysiloxane A—F zu handelsüblichen Vinylchlorid-Ethylenvinylacetat-Pfropfpolymerisaten (VCEVA) in einer praxisüblichen Formulierung erzielt. Dabei können VCEVA-Typen mit unterschiedlichem EVA-Gehalt zur Einstellung des gewünschten Modifikatorgehaltes herangezogen werden.

Beispiele 2.6—2.11

2.6 600 Gew.-Teile eines VCEVA-Handelsproduktes (EVA-Gehalt 10 Gew.-%, K-Wert 68), 400 Gew.-Teile S-PVC (K-Wert 65), 15 Gew.-Teile eines festen Zinnstabilisators (Di-n-octylzinnmercaptid) werden in einem Heiz-Kühlmischer (1500 UpM) in der für Hart-PVC-Dryblends gebräuchlichen Verfahrensweise aufbereitet. 1000 g dieser PVC-Formmasse (Vergleichsbeispiel) werden auf einer Labormischwalze, wie in Tabelle III beschrieben, unter Walzbedingungen, wie in Tabelle III beschrieben, zu Walzfellen verarbeitet, zu Platten verpreßt, wie in Tabelle III beschrieben, und an den daraus hergestellten Probekörpern die Kerbschlagzähigkeit bestimmt.
2.7 1000 Gew.-Teile eines VCEVA-Handelsproduktes (EVA-Gehalt 6 Gew.-%, K-Wert 69), 15 Gew.-Teile eines festen Zinnstabilisators (Di-n-octylzinnmercaptid) werden, wie in Beispiel 2.6 beschrieben, aufbereitet, gewalzt, gepreßt und die Kerbschlagzähigkeit bestimmt.
2.8 Zu 1015 Gew.-Teilen einer PVC-Formmasse, Zusammensetzung wie in Beispiel 2.6, werden 15 Gew.-Teile Polysiloxan A gegeben, aufbereitet, gewalzt, gepreßt und geprüft, wie in Beispiel 2.6 beschrieben.
2.9 Zu 1015 Gew.-Teilen einer PVC-Formmasse, Zusammensetzung wie in Beispiel 2.6, werden 15 Gew.-Teile Polysiloxan B gegeben, aufbereitet, gewalzt, gepreßt und geprüft, wie in Beispiel 2.6 beschrieben.
2.10 100 Gew.-Teile einer PVC-Formmasse, Zusammensetzung und Aufbereitung wie in Beispiel 2.6 beschrieben, werden nach Zugabe von 1,5 Gew.-Teilen Polysiloxan E gewalzt, gepreßt und geprüft, wie in Beispiel 2.6 beschrieben.
2.11 Zu 1015 Gew.-Teilen einer PVC-Formmasse, Zusammensetzung wie in Beispiel 2.7 beschrieben, werden 15 Gew.-Teile Polysiloxan B gegeben, aufbereitet, gewalzt, gepreßt und geprüft, wie in Beispiel 2.6 beschrieben.

Tabelle III

Kerbschlagzähigkeit (kJ/m²) nach DIN 53 453 bei 23°C in Abhängigkeit von der Walzdauer bei 175°C Walztemperatur, gemessen an Probekörpern, die aus Preßplatten der Beispiele 2.6—2.11 hergestellt wurden.

Walzfellherstellung:
Laborwalze, Walzenbreite 450 mm, Walzendurchmesser 204 mm, Walzendrehzahlen 29 : 24, Walzenspalt 0,5 mm, Walztemperatur 175°C, Probennahme aus lfd. Walzfell f. Preßplatte s. u. nach 10', 20', 30', 40'.

Preßplattenherstellung:
Abmessung 100×100×4 mm, Vorheizen 7 Min., Pressen 3 Min. b. 24,5 N/mm², Preßtemperatur 175°C.

| Beispiele | Gew.-Teile der Polysiloxane A—F auf 1000 Gew.-Teile des Beispiels 2.6 oder 2.7 | | | Kerbschlagzähigkeitswerte (kJ/m$^2$) bei 23°C in Abhängigkeit von nachstehenden Walzbedingungen | | | |
|---|---|---|---|---|---|---|---|
| | Gew.-Teile | Sl-Typ | Beispiel | 175°C 10′ | 175°C 20′ | 175°C 30′ | 175°C 40′ |
| 2.6 | — | — | Vergleich | 28 | 9 | 7 | 7 |
| 2.7 | — | — | Vergleich | 32 | 13 | 5 | 4 |
| 2.8 | 15 | A | 2.6 | 35 | 29 | 23 | 21 |
| 2.9 | 15 | B | 2.6 | 28 | 24 | 25 | 20 |
| 2.10 | 15 | E | 2.6 | 26 | 36 | 41 | 43 |
| 2.11 | 15 | B | 2.7 | 29 | 29 | 27 | 23 |

Wie aus Tabelle III ersichtlich, wird durch den Zusatz der Polysiloxane zu EVA-modifizierten Hart-PVC-Formmassen die Dauerfriktionsbeständigkeit unter den beschriebenen Versuchsbedingungen um das 4fache vergrößert, ohne daß ein wesentlicher Zähigkeitsverlust eintritt.


## Beispiele 2.12—2.17

2.12 600 Gew.-Teile eines VCEVA-Handelsproduktes (EVA-Gehalt 10 Gew.-%, K-Wert 68), 400 Gew.-Teile S-PVC (K-Wert 65), 25 Gew.-Teile Barium-Cadmiumstabilisator fest (mind. 10% Cd-Gehalt), 10 Gew.-Teile epoxidiertes Sojabohnenöl, 5 Gew.-Teile Organophosphit, 3 Gew.-Teile Oxistearinsäure, 3 Gew.-Teile Wachsester, 30 Gew.-Teile Titandioxid (Typ Rutil) und 30 Gew.-Teile Füllstoff (gecoatetes Calciumcarbonat) werden in einem Heiz-Kühl-Mischer (1500 UpM) in der für Hart-PVC-Dryblends gebräuchlichen Verfahrensweise aufbereitet. Jeweils 110 g dieser PVC-Formmasse (Vergleichsbeispiel) werden auf einer Labormischwalze, wie in Tabelle IV beschrieben, unter Walzbedingungen, wie in Tabelle IV beschrieben, zu Walzfellen verarbeitet, zu Platten verpreßt, wie in Tabelle IV beschrieben, und an den daraus hergestellten Probekörpern die Kerbschlagzähigkeit bestimmt.

2.13 1000 Gew.-Teile eines VCEVA-Handelsproduktes (EVA-Gehalt 6 Gew.-%, K-Wert 69), Stabilisatoren, Gleitmittel, Pigment und Füllstoff wie in Beispiel 2.12 werden, wie in Beispiel 2.12 beschrieben, aufbereitet. Jeweils 110 g dieser PVC-Formmasse (Vergleichsbeispiel) werden, wie in Beispiel 2.12 beschrieben, gewalzt, gepreßt und geprüft.

2.14 Zu 1106 Gew.-Teilen einer PVC-Formmasse, Zusammensetzung wie in Beispiel 2.12, werden 15 Gew.-Teile Polysiloxan D gegeben, aufbereitet, gewalzt, gepreßt und geprüft, wie in Beispiel 2.12 beschrieben.

2.15 Zu 1106 Gew.-Teilen einer PVC-Formmasse, Zusammensetzung wie in Beispiel 2.12, werden 15 Gew.-Teile Polysiloxan C gegeben, aufbereitet, gewalzt, gepreßt und geprüft, wie in Beispiel 2.12 beschrieben.

2.16 110 Gew.-Teile einer PVC-Formmasse, Zusammensetzung und Aufbereitung wie in Beispiel 2.12 beschrieben, werden nach Zugabe von 1,5 Gew.-Teilen Polysiloxan E gewalzt, gepreßt und geprüft, wie in Beispiel 2.12 beschrieben.

2.17 Zu 1106 Gew.-Teilen einer PVC-Formmasse, Zusammensetzung wie in Beispiel 2.13, werden 5 Gew.-Teile Polysiloxan B gegeben, aufbereitet, gewalzt, gepreßt und geprüft, wie in Beispiel 2.12 beschrieben.


Tabelle IV

Kerbschlagzähigkeit (kJ/m$^2$) nach DIN 53 453 bei 23°C in Abhängigkeit von der Walzdauer bei 185°C Walztemperatur, gemessen an Probekörpern, die aus Preßplatten der Beispiele 2.12—2.17 hergestellt wurden.

Walzfellherstellung:
Laborwalze, Walzenbreite 450 mm, Walzendurchmesser 204 mm, Walzendrehzahlen 29 : 24, Walzenspalt 0,5 mm, Walztemperatur 185°C, Probennahme aus dem lfd. Walzfell f. Preßplatten nach 10′, 20′, 30′, 40′.

**0 051 770**

Preßplattenherstellung:
Abmessung $100 \times 100 \times 4$ mm, Vorheizen 7 Min., Pressen 3 Min. b. 23,5 N/mm², Preßtemperatur 175° C.

| Beispiele | Gew.-Teile der Polysiloxane A—F auf 1000 Gew.-Teile des Beispiels 2.12 oder 2.13 | | | Kerbschlagzähigkeitswerte (kJ/m²) bei 23° C in Abhängigkeit von nachstehenden Walzbedingungen | | | |
|---|---|---|---|---|---|---|---|
| | Gew.-Teile | SI-Typ | Beispiel | 185° C 10' | 185° C 20' | 185° C 30' | 185° C 40' |
| 2.12 | — | — | Vergleich | 15 | 6 | 4 | 3 |
| 2.13 | — | — | Vergleich | 44 | 11 | 10 | 8 |
| 2.14 | 15 | D | 2.12 | 32 | 40 | 44 | 40 |
| 2.15 | 15 | C | 2.12 | 30 | 24 | 20 | 35 |
| 2.16 | 15 | E | 2.12 | 40 | 23 | 22 | 20 |
| 2.17 | 5 | B | 2.13 | 45 | 33 | 23 | 22 |

Wie aus Tabelle IV ersichtlich, ergibt der Zusatz der Polysiloxane zu EVA-modifizierten Hart-PVC-Formmassen in einer praxisüblichen Formulierung, auch bei erhöhter Walztemperatur, eine wesentliche Vergrößerung der Dauerfriktionsbeständigkeit ohne wesentlichen Zähigkeitsverlust.

### Beispiele 2.18—2.20

2.18 Eine PVC-Formmasse, bestehend aus 100 Gew.-Teilen eines VCEVA-Handelsproduktes (EVA-Gehalt 6 Gew.-%, K-Wert 69), 2,5 Gew.-Teilen eines festen Barium/Cadmium-Komplexstabilisators (mind. 10% Cd-Gehalt), 1 Gew.-Teil epoxidiertem Sojabohnenöl, 0,4 Gew.-Teilen eines organischen Phosphits, 0,2 Gew.-Teilen Oxistearinsäure, 0,3 Gew.-Teilen Wachsester, 3,5 Gew.-Teilen Titandioxid, 2,5 Gew.-Teilen Calciumcarbonat, werden in einem Heiz/Kühlmischer (1500 UpM) nach den für Hart-PVC gebräuchlichen Verarbeitungsmethoden zu einer rieselfähigen, homogenen Pulvermischung (Dry blend) aufbereitet.

2.19 Zu einer PVC-Formmasse, Zusammensetzung wie in Beispiel 2.18 beschrieben, werden 0,5 Gew.-Teile Polysiloxan C gegeben und aufbereitet, wie in Beispiel 2.18 beschrieben.

2.20 Eine PVC-Formmasse, bestehend aus 100 Gew.-Teilen eines VCEVA-Laborpfropfproduktes (EVA-Gehalt 6 Gew.-%, Gehalt an Polysiloxan B 0,51 Gew.-%, K-Wert 66), Stabilisatoren, Gleitmittel, Pigment und Füllstoff wie in Beispiel 2.18 beschrieben, wird aufbereitet, wie in Beispiel 2.18 beschrieben.

### Herstellung des VCEVA-Laborpfropfproduktes (2.20)

Ein Rührautoklav wird mit 525 Gew.-Teilen eines EVA-Copolymerisats ($\eta = 1,23$; gemessen in Toluol; Vinylacetatgehalt 45%), 45 Gew.-Teilen Polysiloxan B, 5 Gew.-Teilen $\alpha,\alpha'$-Azodiisobutyronitril, 22 500 Gew.-Teilen Wasser, 50 Gew.-Teilen Methylcellulose (65 HG 50 cps, Fa. DOW) und 8900 Gew.-Teilen Vinylchlorid beschickt.

Man rührt 5 Std. bei Raumtemperatur, um die festen Stoffe zu lösen, und polymerisiert anschließend durch 15stündiges Erhitzen auf 60° C.

Nach dem Erkalten des Reaktionsgemisches und dem Entspannen des Rührautoklaven lassen sich 8780 Gew.-Teile (92%) eines feinteiligen Produktes isolieren. Es wird bei 60° C im Vakuum getrocknet und enthält 6 Gew.-% EVA-Copolymerisat sowie 0,51 Gew.-% Polysiloxan B. Der K-Wert des Pfropfproduktes beträgt 66, gemessen in Cyclohexanon.

Diese Pulvermischungen (2.18, 2.19, 2.20) werden auf einem Doppelschneckenextruder von 85 mm Schneckendurchmesser und 17 D Schneckenlänge über ein Profilwerkzeug, bestehend aus Düse und dreiteiliger Vakuumkalibrierung, zu einem Fensterprofil extrudiert.

Aus den extrudierten Profilen werden Probekörper für folgende Prüfungen entnommen:

a) Kerbschlagzähigkeit bei 23° C nach DIN 53 453.
b) Bestimmung der Maßänderung nach Warmlagerung gemäß Pkt. 3.2.8 der Güte- und Prüfbestim-

9

**0 051 770**

mungen RAL-RG 716/1 für Kunststoff-Fensterprofile und Kunststoff-Fenster des QK e. B. und GKF e. V.

c) Bestimmung der Zähigkeitsreserven mittels Kerbschlagzähigkeit nach DIN 53 453 an Probekörpern, hergestellt durch Granulieren des Fensterprofils, Walzen von je 100 g dieses Granulats bei 175°C und zunehmender Walzzeit von 2′, 4′, 6′, 8′ sowie nachfolgender Preßplattenherstellung.

Tabelle V

Maschinendaten und Prüfergebnisse zu den extrudierten Profilen der Beispiele 2.18–2.20

| | Beispiel 2.18 Vergleich VCEVA- Handelsprodukt | Beispiel 2.19 VCEVA- Handelsprodukt +0,5% Polysiloxan C | Beispiel 2.20 VCEVA- Laborprodukt +0,51% Polysiloxan B | Beispiel 2.18 Vergleich VCEVA- Handelsprodukt | Beispiel 2.19 VCEVA- Handelsprodukt +0,5% Polysiloxan C | Beispiel 2.20 VCEVA- Laborprodukt +0,51% Polysiloxan B |
|---|---|---|---|---|---|---|
| Massetemperatur (°C) | 186 | 186 | 186 | 196 | 196 | 196 |
| Schneckendrehzahl (min$^{-1}$) | 10,6 | 10,6 | 10,6 | 10,6 | 10,6 | 10,6 |
| $N_{Motor}$(kw) | 10,3 | 9,7 | 9,8 | 9,8 | 9,4 | 9,3 |
| Ausstoß (kg/h) | 67 | 71 | 70 | 66 | 71 | 69 |
| Kerbschlagzähigkeit nach DIN 53453 bei 23°C (kJ/m²) | 36 | 38 | 29 | 18 | 32 | 26 |
| Maßänderung nach Warmlagerung nach RAL-RG 716/1 (%) | 1,9 2,0 1,8 | 1,5 1,5 1,6 | 1,4 1,5 1,5 | 2,1 2,1 1,9 | 1,7 1,5 1,6 | 1,6 1,5 1,6 |

Wie aus Tabelle V ersichtlich, ergibt der Gehalt von 0,5 Gew.-% Polysiloxan C bzw. 0,51 Gew.-% Polysiloxan B in EVA-modifizierten Hart-PVC-Formmassen wesentlich geringere Schrumpfwerte an den extrudierten Profilen. Dieser schrumpfreduzierende Effekt geht auch durch die Erhöhung der Massetemperatur von 186°C auf 196°C nicht verloren.

Während sämtliche Versuchseinstellungen konstant gehaltene Schneckendrehzahl von 10,6 UpM aufweisen, wird überraschenderweise die Stromaufnahme bei der Verarbeitung der siloxanmodifizierten Versionen deutlich reduziert, wobei es gleichzeitig zu einer Erhöhung der Ausstoßleistung kommt.

Der Effekt der Erweiterung der Verarbeitungsbreite ist auch an den extrudierten Profilen deutlich ausgeprägt. So werden bei der erhöhten Massetemperatur von 196°C Kerbschlagzähigkeiten von 32 bzw. 26 kJ/m² erzielt, während am siloxanfreien Vergleichsmuster lediglich 18 kJ/m² gemessen wurden.

Tabelle VI

Nachweis der Herabsetzung der Verarbeitungsempfindlichkeit an den Beispielen 2.18—2.20

Die aus den Formmassen der Beispiele 2.18—2.20 extrudierten Profile werden granuliert, sodann jeweils 100 g dieses Granulats auf einer Labormischwalze, wie in Tabelle I beschrieben, bei 175°C und zunehmenden Walzzeiten gewalzt, zu Platten verpreßt, daraus Probekörper hergestellt und die Kerbschlagzähigkeit bestimmt.

| Walztemperatur 175°C Walzzeiten siehe unten Preßtemperatur 175°C | Beispiel 2.18 Massetemp. bei Extrusion 186°C | Beispiel 2.19 Massetemp. bei Extrusion 186°C | Beispiel 2.20 Massetemp. bei Extrusion 186°C | Beispiel 2.18 Massetemp. bei Extrusion 196°C | Beispiel 2.19 Massetemp. bei Extrusion 196°C | Beispiel 2.20 Massetemp. bei Extrusion 196°C |
|---|---|---|---|---|---|---|
| Walzzeit | | | | | | |
| 2 Min. | 26 (kJ/m²) | 36 (kJ/m²) | 30 (kJ/m²) | 14 (kJ/m²) | 30 (kJ/m²) | 26 (kJ/m²) |
| 4 Min. | 16 (kJ/m²) | 31 (kJ/m²) | 25 (kJ/m²) | 9 (kJ/m²) | 28 (kJ/m²) | 25 (kJ/m²) |
| 6 Min. | 8 (kJ/m²) | 30 (kJ/m²) | 22 (kJ/m²) | 7 (kJ/m²) | 28 (kJ/m²) | 22 (kJ/m²) |
| 8 Min. | 7 (kJ/m²) | 28 (kJ/m²) | 19 (kJ/m²) | 4 (kJ/m²) | 23 (kJ/m²) | 18 (kJ/m²) |

Die Darstellung der Tabelle VI zeigt eindeutig, daß durch den Zusatz des Polysiloxans eine wesentliche Erhöhung der Resistenz der Formmasse gegen Zähigkeitsverlust bei mechanischer Belastung auf der Walze erzielt wird. Während das polysiloxanfreie Vergleichsbeispiel nach 6 Minuten Walzzeit nur noch eine Kerbschlagzähigkeit von 8 kJ/m² aufweist, liegen die modifizierten Muster bei 22 kJ/m² bzw. 30 kJ/m² bzw. 30 kJ/m² und bewahren auch nach 8minütigem Walzen bei 175°C noch ihrer hohe Kerbschlagzähigkeit mit 19 kJ/m². Auch das bei 196°C Massetemperatur extrudierte Material weist im Gegensatz zum gleich behandelten polysiloxanfreien Muster bei Walzzeiten von 4, 6 und 8 Minuten wesentlich höhere Kerbschlagzähigkeiten auf.

# 0 051 770

Tabelle VII

Maschinendaten und Prüfergebnisse zu den extrudierten Profilen der Beispiele 2.21 und 2.22

| | Beispiel 2.21 Vergleich PVC/CPE | Beispiel 2.22 PVC/CPE +0,5% Polysiloxan A | Beispiel 2.21 Vergleich PVC/CPE | Beispiel 2.22 PVC/CPE +0,5% Polysiloxan A |
|---|---|---|---|---|
| Massetemperatur (°C) | 184 | 184 | 197 | 197 |
| Schneckendrehzahl (min$^{-1}$) | 10,2 | 10,2 | 10,2 | 10,2 |
| $N_{Motor}$ (kW) | 9,5 | 8,9 | 9,2 | 8,5 |
| Ausstoß (kg/h) | 61 | 65 | 60 | 63 |
| Kerbschlagzähigkeit nach DIN 53453 bei 23°C (kJ/m$^2$) | 31 | 34 | 15 | 30 |
| Maßänderung nach Warmlagerung nach RAL-RG 716/1 (%) | 1,8<br>1,8<br>1,9 | 1,6<br>1,4<br>1,5 | 1,9<br>2,0<br>2,0 | 1,7<br>1,5<br>1,7 |

Auch an diesem Beispiel der Verarbeitung einer Formmasse aus Polyvinylchlorid und chloriertem Polyethylen erweist sich der Effekt des zugesetzten Polysiloxans in der Weise, daß die Kerbschlagzähigkeit des extrudierten Profils bei der erhöhten Massetemperatur von 197°C praktisch im Gegensatz zum polysiloxanfreien Vergleichsbeispiel mit 30 kJ/m$^2$ unverändert bleibt. Ferner wird auch hier beobachtet, daß durch den Zusatz des Polysiloxans in jedem Fall die Stromaufnahme unter Ausstoßvergrößerung zurückgeht. Desgleichen wird beobachtet, daß die beiden im Experiment gewählten Massetemperaturen (184°C und 197°C) die polysiloxanmodifizierten Muster eine deutliche Reduzierung des Schrumpfes nach Wärmelagerung zeigen.

## Patentansprüche

1. Kerbschlagzähe Polyvinylchlorid-Formmasse mit geringem Schrumpfwert auf der Basis von

a) 99−85 Gew.-% Polyvinylchlorid und
b) 1−15 Gew.-% eines Ethylen-Vinylacetat-Copolymerisats als Schlagfestmodifikator, gegebenenfalls enthaltend übliche Zusätze und Hilfsmittel,

dadurch gekennzeichnet, daß die Formmasse

c) 0,1−2,0 Gew.-%, bezogen auf die Summe von a) und b), die stets 100 Gew.-% beträgt, flüssige Polysiloxane mit Viskositäten von 20−100 000 cSt (mm$^2$/s) und/oder feste Polysiloxane mit Molgewichten von 20 000−500 000 enthält.

2. Formmasse nach Anspruch 1, dadurch gekennzeichnet, daß sie als flüssige Polysiloxane Polydimethylsiloxane und/oder Polyphenylmethylsiloxane mit Methylendgruppen enthält.

3. Formmasse nach Anspruch 2, dadurch gekennzeichnet, daß die flüssigen Polysiloxane eine Viskosität von 60−50 000 cSt (mm$^2$/s) besitzen.

4. Formmasse nach Anspruch 1, dadurch gekennzeichnet, daß sie feste Polydimethylsiloxane mit OH-Endgruppen und Molgewichten von 40 000−100 000 enthält.

5. Formmasse nach Anspruch 1, dadurch gekennzeichnet, daß sie feste Polydimethylsiloxane mit Vinyl-Endgruppen und Molgewichten von 20 000−500 000 enthält.

6. Formmasse nach Anspruch 1−5 auf der Basis eines Pfropfpolymerisats aus

a) 85−97 Gew.-% polymerisierten Einheiten von Vinylchlorid auf
b) 15−3 Gew.-% eines Ethylen-Vinylacetat-Copolymerisats,

wobei die Summe von a) und b) stets 100 Gew.-% beträgt,

dadurch gekennzeichnet, daß sie

c)   0,1−2,0 Gew.-%, bezogen auf Pfropfpolymerisat, Polysiloxane enthält.

7. Formmasse nach Anspruch 1−5 auf der Basis einer Mischung aus

a)   Polyvinylchlorid und
b)   einem Pfropfpolymerisat aus
   1)   40−96 Gew.-% polymerisierten Einheiten von Vinylchlorid auf
   2)   4−60 Gew.-% eines Ethylen-Vinylacetat-Copolymerisats,

wobei die Summe von 1) und 2) stets 100 Gew.-% und der Gesamtgehalt der Mischungen an Ethylen-Vinylester-Copolymerisat 3−15 Gew.-% beträgt,

dadurch gekennzeichnet, daß sie

c)   0,1−2,0 Gew.-%, bezogen auf die Mischung aus a) und b), Polysiloxane enthält.

8. Formmasse nach Anspruch 6−7, dadurch gekennzeichnet, daß ihr Gehalt an Ethylen-Vinylacetat-Copolymerisat 4−8 Gew.-% beträgt.

## Claims

1. A notched-impact-resistant polyvinyl chloride moulding composition having a low shrinkage value, based on

a)   99−85% by weight of polyvinyl chloride and
b)   1−15% by weight of an ethylene/vinyl acetate copolymer as the impact resistant modifier, optionally containing customary additives and auxiliaries,

characterised in that the moulding composition contains

c)   0.1−2.0% by weight, based on the sum of a) and b), which is always 100% by weight, of liquid polysiloxanes having viscosities of 20−100,000 cSt (mm$^2$/s) and/or solid polysiloxanes having molecular weights of 20,000−500,000.

2. A moulding composition according to Claim 1, characterised in that it contains as liquid polysiloxanes polydimethyl siloxanes and/or polyphenylmethyl siloxanes having methyl terminal groups.
3. A moulding composition according to Claim 2, characterised in that the liquid polysiloxanes have a viscosity of 60−50,000 cSt (mm$^2$/s).
4. A moulding composition according to Claim 1, characterised in that it contains solid polydimethyl siloxanes having OH therminal groups and molecular weights of 40,000−100,000.
5. A moulding composition according to Claim 1, characterised in that it contains solid polydimethyl siloxanes having vinyl terminal groups and molecular weights of 20,000−500,000.
6. A moulding composition according to Claim 1−5 based on a graft polymer of

a)   85−97% by weight of polymerised units of vinyl chloride on
b)   15−3% by weight of an ethylene/vinyl acetate copolymer,

the sum of a) and b) always being 100% by weight,

characterised in that it contains

c)   0.1−2.0% by weight, based on the graft polymer, of polysiloxanes.

7. A moulding composition according to Claim 1−5 based on a mixture of

a)   polyvinyl chloride and
b)   a graft polymer of
   1)   40−96% by weight of polymerised units of vinyl chloride on
   2)   4−60% by weight of an ethylene/vinyl acetate copolymer,

**0 051 770**

the sum of 1) and 2) always being 100% by weight and the total content in the mixtures of ethylene/vinyl ester copolymer being 3—15% by weight,

characterised in that it contains

c) 0.1—2.0% by weight, based on the mixture of a) and b), of polysiloxanes.

8. A moulding composition according to Claim 6—7, characterised in that its content of ethylene/vinyl acetate copolymer is 4—8% by weight.

**Revendications**

1. Composition à mouler contenant du chlorure de polyvinyle, résistant au choc avec entaille, à faible valeur de retrait, à base de

a) 99—85% en poids de chlorure de polyvinyle et
b) 1—15% en poids d'un copolymère éthylène-acétate de vinyle comme modificateur de résistance au choc, contenant éventuellement des additifs et des adjuvants classiques,

caractérisée en ce qu'elle renferme

c) 0,1—2,0% en poids, par rapport à la somme de a) et b) qui s'élève toujours à 100% en poids, de polysiloxane liquide ayant des viscosités de 20—100 000 cSt (mm$^2$/s) et/ou des polysiloxanes solides ayant des poids moléculaires de 20 000—500 000.

2. Composition à mouler suivant la revendication 1, caractérisée en ce qu'elle contient comme polysiloxanes liquides des polydiméthylsiloxanes et/ou des polyphénylméthylsiloxanes portant des groupes méthyle terminaux.

3. Composition à mouler suivant la revendication 2, caractérisée en ce que les polysiloxanes liquides ont une viscosité de 60—50 000 cSt (mm$^2$/s).

4. Composition à mouler suivant la revendication 1, caractérisé en ce qu'elle contient des polydiméthylsiloxanes solides portant des groupes OH terminaux et ayant des poids moléculaires de 40 000 à 100 000.

5. Composition à mouler suivant la revendication 1, caractérisée en ce qu'elle contient des polydiméthylsiloxanes solides portant des groupes vinyle terminaux et ayant des poids moléculaires de 20 000 à 500 000.

6. Composition à mouler suivant les revendications 1—5, à base d'un polymère de greffage de

a) 85—97% en poids de motifs polymérisés de chlorure de vinyle sur
b) 15—3% en poids d'un copolymère éthylène-acétate de vinyle,

la somme de a) et b) s'élevant toujours à 100% en poids,

caractérisée en ce qu'elle contient

c) 0,1—2,0% en poids, par rapport au polymère de greffage, de polysiloxanes.

7. Composition à mouler suivant les revendications 1—5, à base d'un mélange

a) de chlorure de polyvinyle et
b) d'un polymère de greffage de
   1) 40—96% en poids de motifs polymérisés de chlorure de vinyle sur
   2) 4—60% en poids d'un copolymère éthylène-acétate de vinyle,

la somme de 1) et 2) s'élevant toujours à 100% en poids et la teneur totale des mélanges en copolymère éthylène-ester vinylique s'élevant à 3—15% en poids,

caractérisée en ce qu'elle contient

c) 0,1—2,0% en poids de polysiloxanes, par rapport au mélange de a) et b).

8. Composition à mouler suivant les revendications 6—7, caractérisée en ce que sa teneur en copolymère éthylène-acétate de vinyle s'élève à 4—8% en poids.

15